# EUROPÄISCHE PATENTANMELDUNG

(11) **EP 4 582 334 A1**
(43) Veröffentlichungstag der Anmeldung: **09.07.2025**
(21) Anmeldenummer: 24217948.9
(22) Anmeldetag: 06.12.2024
(51) Int. Cl.: B62D 25/02

(54) **MASSGESCHNEIDERTES HALBZEUG UND SEITENWANDVERSTÄRKUNG**

(30) Priorität: 04.01.2024 DE 102024100227
(71) Anmelder: ThyssenKrupp Steel Europe AG, 47166 Duisburg (DE)
(72) Erfinder: Breidenbach, Andreas, 47166 Duisburg (DE); Eiden, Stefan, 47166 Duisburg (DE); Böttcher, Thomas, 47166 Duisburg (DE)
(74) Vertreter: ThyssenKrupp Steel Europe AG

(57) **Zusammenfassung**

Die Erfindung betrifft ein maßgeschneidertes Halbzeug (H, H') für die Herstellung einer kaltgeformten Seitenwandverstärkung (10, 10') sowie eine kaltgeformte Seitenwandverstärkung (10, 10').

## Beschreibung

Die Erfindung betrifft ein maßgeschneidertes Halbzeug für die Herstellung einer kaltgeformten Seitenwandverstärkung sowie eine warmpressgehärtete äußere Seitenwandverstärkung.

Die passive Fahrzeugsicherheit stellt ein entscheidendes Anforderungskriterium für Fahrzeuge dar. Sie wird maßgeblich durch das Strukturverhalten der Karosserie im Crashfall beeinflusst. Je nach Lastfall ergeben sich lokal stark unterschiedliche Anforderungen an die Strukturkomponenten. Bei der Gestaltung entsprechender Lösungsmöglichkeiten ist außerdem stets das Ziel des Strukturleichtbaus und somit eines möglichst geringen Materialeinsatzes zu beachten.

Weiterhin ist die Torsionssteifigkeit ein wichtiger Faktor für die Fahrsicherheit und den Komfort eines Kraftfahrzeugs. Sie beschreibt die Widerstandsfähigkeit einer Karosserie gegen Verformungen, die durch äußere Einflüsse wie Fahrbahnunebenheiten, Kurvenfahrten oder sogar Unfälle verursacht werden.

Die Torsionssteifigkeit ist abhängig von den eingesetzten Werkstoffen, den Materialstärken und der Bauweise der Karosserie. Karosserien in konventioneller Bauweise erreichen in der Regel eine hohe Torsionssteifigkeit. Bei einer konventionellen Bauweisen entstehen in den Knoten der Karosserie Bereiche, die wie ein Schottblech wirken und erheblich zur Torsionssteifigkeit der Karosserie beitragen.

Maßgeschneiderte Halbzeuge sind aus dem Stand der Technik bekannt und werden in der Fachwelt als "tailored blanks" bzw. "tailored welded blanks" für Bleche bezeichnet. Sie haben den Vorteil, dass sie zu Bauteilen, insbesondere Fahrzeugbauteilen weiterverarbeitet werden, die im Vergleich zu monolithischen Materialien Eigenschaften aufweisen, die individuell und bedarfsgerecht ausgelegt werden können. Beispielsweise können mindestens zwei artgleiche Werkstoffe mit unterschiedlichen Dicken aber auch artfremde Werkstoffe miteinander verbunden werden.

Eine integrierte Alternative zu der konventionellen Karosseriebauweise ist die Anwendung von (ganzen) Seitenwänden. Eine sehr effektive Lösung ist die Anwendung der Tailored Blank Technologie. Nach der Fertigung eines Tailored Blanks muss nur noch eine Komponente gehandhabt werden, in der die Funktionen mehrerer Komponenten zusammengeführt sind. Die Zusammenführung der Komponenten führt zu unterschiedlichen Anforderungen in den einzelnen Bereichen eines Tailored Blanks. Es sind Bereiche mit unterschiedlicher Festigkeit, Duktilität, Oberfläche und Materialstärke erforderlich.

Seitenwände für Kraftfahrzeuge, insbesondere PKW, umfassen heutzutage mindestens eine Seitenwandverstärkung, wobei zum Teil ein innere und eine äußere Seitenwandverstärkung zum Einsatz kommen können, und eine die Seitenwandverstärkung(en) nach außen abschließende Außenhaut, wobei die äußere Seitenwandverstärkung aus einem gattungsgemäßen Halbzeug für das Kaltformen bereitgestellt werden kann, vgl. beispielsweise CN 112 208 643 A1. Hier sind zusätzliche, sogenannte Patches lokal auf dem Halbzeug aufgebracht, um die Festigkeits- und Dickenverteilung zu optimieren.

Hiervon ausgehend ist es Aufgabe der vorliegenden Erfindung, ein maßgeschneidertes Halbzeug zur Verfügung zu stellen, mit welchem eine kaltgeformte Seitenwandverstärkung mit im Vergleich zum Stand der Technik verbesserter Torsionssteifigkeit und/oder Crashperformance hergestellt werden kann.

Die aufgezeigte Aufgabe für ein gattungsgemäßes Halbzeug zur Herstellung einer kaltgeformten Seitenwandverstärkung wird dadurch gelöst, dass das maßgeschneiderte Halbzeug mehrere Platinen mit unterschiedlicher Stahlzusammensetzung und/oder unterschiedlicher Dicke umfasst, welche stoffschlüssig miteinander verbunden sind, wobei sich aus den Platinen eine Seitenwandverstärkung mit einer A-Säule, einer B-Säule, optional einer C-Säule, einem Dachträger und einem Schweller, optional einem vorderen Längsträger, ergibt, wobei in mindestens einem Abschnitt ein Verstärkungsblech vorgesehen ist, wobei ein Verstärkungsblech im Abschnitt des Übergangs zwischen B-Säule und Schweller angebunden ist.

Durch die integrierte Bauweise bilden sich in der Seitenwandverstärkung an den Knotenstellen offene Knoten aus, die eine geringe Torsionssteifigkeit aufweisen. Die offenen Knoten sind vor allem im Abschnitt des Übergangs zwischen B-Säule und Schweller, im Abschnitt des Übergangs zwischen B-Säule und Dachträger, im Abschnitt des Übergangs zwischen A-Säule und Schweller, bei einer einfachen Ausführung und bei einer erweiterten Ausführung zusätzlich im Abschnitt des Übergangs zwischen C-Säule und Schweller, im Abschnitt des Übergangs zwischen C-Säule und Dachträger zu finden. Weitere "offene" Knoten können im Abschnitt des Dachträgers im Bereich der Anbindung zum oberen Windlauf und im Abschnitt der A-Säule im Bereich der Anbindung zum unteren Windlauf definiert sein, sowohl bei der einfachen wie auch bei der erweiterten Ausführung.

Die Erfinder haben festgestellt, dass durch eine gezielte Dopplung durch mindestens ein mit dem Halbzeug verbundenem Verstärkungsblech in mindestens einem Knotenbereich die Torsionssteifigkeit in diesem oder diesen Bereichen erhöht werden kann, insbesondere darüber hinaus auch die Crashperformance verbessert werden kann.

Um gezielt die Torsionssteifigkeit der offenen Knoten zu erhöhen, werden in den entsprechenden Abschnitten Verstärkungsbleche eingesetzt. Das oder die Verstärkungsbleche werden vor dem Kaltformen des maßgeschneiderten Halbzeugs mittels eines thermischen Fügeverfahrens gefügt respektive angebunden. Die Verformung des oder der angebundenen Verstärkungsbelche mittels Kaltformens erfolgt somit direkt und in einem Zug mit dem Halbzeug.

Die Anordnung der Verstärkungsbleche muss entsprechend der Torsionssteifigkeits- und insbesondere Crashlastfälle erfolgen, welche beispielsweise in jeder Karosserie verschieden sein können. Nichtdestotrotz liegen diese im Wesentlichen in den vorgenannten Abschnitten der Übergänge und optional zusätzlich im Bereich der Anbindungen.

Die Verstärkungsbleche bestehen insbesondere aus einem Stahlwerkstoff, weisen vorzugsweise eine Dicke zwischen 0,8 und 2,5 mm auf und haben bevorzugt eine Zugfestigkeit zwischen 400 und 1500 MPa.

Der offene Knoten im Abschnitt des Übergangs zwischen B-Säule und Schweller ist besonders anfällig in Bezug auf Torsionssteifigkeit und somit auch in Bezug auf den Crashlastfall, so dass in diesem Abschnitt ein Verstärkungsblech angebunden sein muss.

Kommen beispielsweise zwei Seitenwandverstärkungen zur Anwendung, können entweder nur die innere Seitenwandverstärkung oder nur die äußere Seitenwandverstärkung oder auch beide Seitenwandverstärkungen erfindungsgemäß ausgeführt sein.

Die Torsionssteifigkeit kann verbessert und/oder optimiert werden, wenn beispielsweise zusätzlich ein Verstärkungsblech im Abschnitt des Übergangs zwischen B-Säule und Dachträger angebunden ist.

Zur Verbesserung der Torsionssteifigkeit kann ein weiteres Verstärkungsblech im Abschnitt des Übergangs zwischen A-Säule und Schweller zusätzlich oder alternativ zum Übergang zwischen B-Säule und Dachträger angebunden sein.

Zusätzlich oder alternativ zum Übergang zwischen B-Säule und Dachträger und/oder zum Übergang zwischen A-Säule und Schweller kann des Weiteren ein Verstärkungsblech im Abschnitt des Dachträgers im Bereich der Anbindung zum oberen Windlauf angebunden sein.

Zusätzlich oder alternativ zum Übergang zwischen B-Säule und Dachträger und/oder zum Übergang zwischen A-Säule und Schweller und/oder im Abschnitt des Dachträgers im Bereich der Anbindung zum oberen Windlauf kann auch ein Verstärkungsblech im Abschnitt der A-Säule im Bereich der Anbindung zum unteren Windlauf angebunden sein.

Neben einer einfachen Ausführung in Form eines Türrings (engl. "door ring") kann die bisher beschriebene Verstärkung auch Anwendung bei einer erweiterten Ausführung in Form eines Doppeltürrings (engl. "double door ring") finden, so dass bei einer erweiterten Ausführung zur Verbesserung der Torsionssteifigkeit zusätzlich oder alternativ ein weiteres Verstärkungsblech im Abschnitt des Übergangs zwischen C-Säule und Schweller angebunden sein kann.

Die Torsionssteifigkeit kann verbessert und/oder optimiert werden, wenn beispielsweise ein weiteres Verstärkungsblech im Abschnitt des Übergangs zwischen C-Säule und Dachträger zusätzlich oder alternativ zum Übergang zwischen C-Säule und Schweller angebunden ist.

Auswahl und Kombination von unterschiedlichen Stahlzusammensetzungen und/oder unterschiedlichen Dicken, hohe Zugfestigkeiten und Bruchdehnungen können in einem Halbzeug vereint werden, welches ein hohes Potential zur Gewichtsreduktion der kaltgeformten Seitenwandverstärkung bietet, so dass ein dafür geeignetes maßgeschneidertes Halbzeug bereitgestellt werden kann.

Im Halbzeug kann mindestens eine erste Platine aus einem Stahlwerkstoff, welche eine Zugfestigkeit von größer 1100 bis maximal 1500 MPa, insbesondere bis maximal 1400 MPa, vorzugsweise bis maximal 1300 MPa aufweist, und mindestens eine zweite Platine aus einem Stahlwerkstoff vorgesehen sein, welche eine Zugfestigkeit von größer 900 bis maximal 1100 MPa aufweist.

Die eine erste Platine kann im Halbzeug bevorzugt derart angeordnet sein, woraus sich der Dachträger und ein Teilabschnitt der A-Säule ergibt. Dadurch lässt sich eine verbesserte Stabilisierung der Fahrgastzelle nicht nur in Fahrzeuglängsrichtung, sondern auch in vertikale Richtung erzielen. Insbesondere bei einem hohen Gewicht von batteriebetriebenen (Elektro-) Fahrzeugen stellt die Stabilisierung in die vertikale Richtung einen großen Vorteil dar, der insbesondere bei den Lastfällen, wie zum Beispiel Fahrzeugüberschlag und Dacheindrückung, zugutekommt.

Unter A-, B- und C-Säulen sind vertikale Stützstrukturen an einem Fahrzeug u. a. zur Stabilisierung der Fahrgastzelle zu verstehen. Die A-Säule geht in Richtung des Fahrzeughecks in ihrem oberen Teilabschnitt in den Dachträger über und der Dachträger ist im weiteren Verlauf in Richtung Fahrzeugheck jeweils mit dem oberen Teilabschnitt der B-Säule und optional bzw. bei der erweiterten Ausführung mit dem oberen Teilabschnitt der C-Säule verbunden. Gegenüberliegend zum Dachträger ist der Schweller im Bodenbereich des Fahrzeugs angeordnet, welcher sich vom vorderen zum hinteren Radhaus erstreckt, und welcher ausgehend von dem unteren Teilabschnitt der A-Säule im weiteren Verlauf in Richtung Fahrzeugheck jeweils mit dem unteren Teilabschnitt der B-Säule und optional bzw. bei der erweiterten Ausführung mit dem unteren Teilabschnitt der C-Säule verbunden ist. Unter "verbunden" kann auch ein "integral (oder einstückig) ausgeführt sein" verstanden werden, was bei einem erfindungsgemäßen Halbzeug zur Herstellung einer kaltgeformten Seitenwandverstärkung zutrifft.

Eine stoffschlüssige Verbindung zwischen den einzelnen Platinen erfolgt durch Schweißen, so dass die Platinen bevorzugt jeweils im Stumpfstoß miteinander verbunden sind. Die Art und Weise zum Schweißen sind dem Fachmann bekannt.

Das Halbzeug kann mindestens eine dritte Platine aus einem Stahlwerkstoff umfassen, welche eine Zugfestigkeit von größer 700 bis maximal 900 MPa aufweist.

Das Halbzeug kann mindestens eine vierte Platine aus einem Stahlwerkstoff umfassen, welche eine Zugfestigkeit von mindestens 400 bis maximal 700 MPa aufweist.

Die verwendeten Platinen mit den aufgeführten Zugfestigkeiten hängen im Wesentlichen vom Kohlenstoffgehalt der jeweiligen Stahlzusammensetzung ab, so dass der Anstieg der Zugfestigkeit im Wesentlichen mit einer Zunahme des Kohlenstoffgehalts im Stahlwerkstoff einhergeht.

Bevorzugt kommen Dualphasen-Stahlwerkstoffe zur Anwendung. Jedoch können auch andere Stahlwerkstoffe in den vorgenannten Zugfestigkeitsgrenzen, wie zum Beispiel Q&P-Stahlwerkstoffe, zur Anwendung kommen.

Im Halbzeug kann eine weitere erste Platine angeordnet sein, vorzugsweise derart, woraus sich zumindest ein Teilabschnitt der B-Säule ergibt. Der Teilabschnitt, in welchem die weitere erste Platine angeordnet ist, deckt mindestens 70 % der Erstreckung der B-Säule ab. Vorzugsweise ist die weitere erste Platine zwischen den die Dachträger und Schweller bildenden Platinen angeordnet. Vorzugsweise liegt die Schweißnaht zur Verbindung der die Dachträger und die B-Säule bildenden Platinen unterhalb der den Dachträger bildende Platine und die Schweißnaht zur Verbindung der die Schweller und die B-Säule bildenden Platinen oberhalb der den Schweller bildende Platine. Im Wesentlichen kann der Verlauf der Schweißnähte waagerecht sein.

Im Halbzeug kann eine weitere erste Platine angeordnet sein, beispielsweise derart, woraus sich zumindest ein Teilabschnitt des Schwellers oder woraus sich der Schweller ergibt.

Die ersten Platinen können somit aus einem identischen oder ähnlichen Stahlwerkstoff bestehen, sind aber derart beschaffen, dass sie eine Zugfestigkeit von größer 1100 bis 1500 MPa aufweisen. Vorzugsweise unterscheiden sie sich zumindest in ihrer Dicke. Die Dicke der ersten Platine kann zwischen 0,8 und 2,5 mm, insbesondere zwischen 0,9 und 2,2 mm, vorzugsweise zwischen 1,0 und 2,0 mm betragen.

Im Halbzeug kann die zweite Platine derart angeordnet sein, woraus sich zumindest ein Teilabschnitt der A-Säule ergibt. Die den Schweller bildende Platine kann sich beispielsweise vollständig zwischen dem vorderen und hinteren Radhaus erstrecken. Die Schweißnaht zur Verbindung der den Teilabschnitt der A-Säule verläuft somit im Wesentlichen senkrecht, oberhalb der den Schweller bildende Platine.

Die zweiten Platinen können aus einem identischen oder ähnlichen Stahlwerkstoff bestehen, sind aber derart beschaffen, dass sie eine Zugfestigkeit von größer 900 bis 1100 MPa aufweisen. Vorzugsweise unterscheiden sie sich zumindest in ihrer Dicke. Die Dicke der zweiten Platine kann zwischen 0,8 und 2,5 mm, insbesondere zwischen 0,9 und 2,2 mm, vorzugsweise zwischen 1,0 und 2,0 mm betragen.

Angaben wie "senkrecht" und "waagerecht" beziehen sich im Wesentlichen auf den eingebauten Zustand im/am Fahrzeug, so dass eine eindeutige und unmissverständliche Zuordnung vorliegt. Die Bezeichnung "im Wesentlichen" lässt auch eine minimale Abweichung des Verlaufs der Schweißnaht zwischen 0 und +/- 10° zur Senkrechten oder Waagerechten zu.

Im Halbzeug kann eine dritte Platine im Halbzeug derart angeordnet sein, woraus sich beispielsweise der vordere Längsträger ergibt.

Die dritten Platinen können aus einem identischen oder ähnlichen Stahlwerkstoff bestehen, sind aber derart beschaffen, dass eine Zugfestigkeit von größer 700 bis 900 MPa aufweisen. Vorzugsweise unterscheiden sie sich zumindest in ihrer Dicke. Die Dicke der dritten Platine kann zwischen 0,8 und 2,5 mm, insbesondere zwischen 0,9 und 2,2 mm, vorzugsweise zwischen 1,0 und 2,0 mm betragen.

Im Halbzeug, u. a. bei einer erweiterten Ausführung, kann eine vierte Platine angeordnet sein, bevorzugt derart, woraus sich zumindest ein Teilabschnitt der C-Säule ergibt. Der Teilabschnitt, in welchem die vierte Platine angeordnet ist, deckt mindestens 70 % der Erstreckung der C-Säule ab. Vorzugsweise ist die vierte Platine zwischen den die Dachträger und Schweller bildenden Platinen angeordnet. Vorzugsweise liegt die Schweißnaht zur Verbindung der die Dachträger und die C-Säule bildenden Platinen unterhalb der den Dachträger bildende Platine und die Schweißnaht zur Verbindung der die Schweller und die C-Säule bildenden Platinen oberhalb der den Schweller bildende Platine. Im Wesentlichen kann der Verlauf der Schweißnähte waagerecht sein.

Die vierten Platinen können aus einem identischen oder ähnlichen Stahlwerkstoff bestehen, sind aber derart beschaffen, dass sie eine Zugfestigkeit von mindestens 400 bis 700 MPa aufweisen. Vorzugsweise unterscheiden sie sich zumindest in ihrer Dicke. Die Dicke der vierten Platine kann zwischen 0,8 und 2,5 mm, insbesondere zwischen 0,9 und 2,2 mm, vorzugsweise zwischen 1,0 und 2,0 mm betragen.

Mindestens eine der Platinen kann mit einem zinkbasierten Überzug beschichtet sein. Vorzugsweise sind alle Platinen mit einem zinkbasierten Überzug beschichtet. Weiter alternativ kann mindestens eine der Platinen unbeschichtet sein.

Aus dem erfindungsgemäßen maßgeschneiderten Halbzeug wird eine Seitenwandverstärkung kaltgeformt. Die Art und Weise zur Herstellung von kaltgeformten Karosseriebauteilen, insbesondere aus maßgeschneiderten Halbzeugen, ist dem Fachmann geläufig.

Die Erfindung betrifft des Weiteren eine kaltgeformte Seitenwandverstärkung mit einer A-Säule, einer B-Säule, optional einer C-Säule, einem Dachträger und einem Schweller, und optional einem vorderen Längsträger, wobei die Seitenwandverstärkung aus einem maßgeschneiderten Halbzeug kaltgeformt ist, wobei Abschnitte der Seitenwandverstärkung mit unterschiedlicher Stahlzusammensetzung und/oder unterschiedlicher Dicke ausgebildet sind, wobei in mindestens einem Abschnitt der Seitenwandverstärkung ein zusätzliches Verstärkungsblech angebunden ist, wobei ein Verstärkungsblech im Abschnitt des Übergangs zwischen B-Säule und Schweller angebunden ist.

Zusätzlich kann ein Verstärkungsblech im Abschnitt des Übergangs zwischen B-Säule und Dachträger angebunden sein.

Zusätzlich oder alternativ kann ein Verstärkungsblech im Abschnitt des Dachträgers im Bereich der Anbindung zum oberen Windlauf angebunden sein.

Zusätzlich oder alternativ kann ein Verstärkungsblech im Abschnitt der A-Säule im Bereich der Anbindung zum unteren Windlauf angebunden sein.

Zusätzlich oder alternativ kann ein Verstärkungsblech im Abschnitt des Übergangs zwischen A-Säule und Schweller angebunden sein.

Zusätzlich oder alternativ kann ein Verstärkungsblech im Abschnitt des Übergangs zwischen C-Säule und Schweller angebunden sein.

Zusätzlich oder alternativ kann ein Verstärkungsblech im Abschnitt des Übergangs zwischen C-Säule und Dachträger angebunden sein.

Der Dachträger und ein Teilabschnitt der A-Säule kann aus einem Stahlwerkstoff mit einer Zugfestigkeit von größer 700 bis 900 MPa, von größer 900 bis 1100 MPa oder von größer 1100 bis 1500 MPa ausgebildet sein.

Ein Teilabschnitt der B-Säule kann aus einem Stahlwerkstoff mit einer Zugfestigkeit von größer 1100 bis 1500 MPa ausgebildet sein.

Ein Teilabschnitt des Schwellers oder der Schweller kann aus einem Stahlwerkstoff mit einer Zugfestigkeit von größer 1100 bis 1500 MPa ausgebildet sein.

Ein Teilabschnitt der A-Säule kann aus einem Stahlwerkstoff mit einer Zugfestigkeit von größer 700 bis 900 MPa oder von größer 900 bis 1100 MPa ausgebildet sein.

Ein Teilabschnitt der C-Säule kann aus einem Stahlwerkstoff mit einer Zugfestigkeit von mindestens 400 bis 700 MPa ausgebildet sein.

Ein vorderer Längsträger kann aus einem Stahlwerkstoff mit einer Zugfestigkeit von größer 700 bis 900 MPa oder von größer 900 bis 1100 MPa ausgebildet sein.

Die kaltgeformte Seitenwandverstärkung (falls zwei Seitenwandverstärkungen zur Anwendung kommen, können die innere und/oder äußere entsprechend ausgeführt sein) findet in einem Fahrzeug mit Hybridantrieb oder bevorzugt mit Elektroantrieb Verwendung.

Mit der erfindungsgemäßen kaltgeformten Seitenwandverstärkung ist somit eine verbesserte Torsionssteifigkeit und/oder Crashperformance möglich.

Im Folgenden wird die Erfindung anhand einer Ausführungsbeispiele darstellenden Zeichnung näher erläutert. Gleiche Teile sind mit gleichen Bezugsziffern versehen. Es zeigt
- **Figur 1:**: ein erstes erfindungsgemäßes, maßgeschneidertes Halbzeug für die Herstellung einer kaltgeformten Seitenwandverstärkung sowie eine daraus kaltgeformte Seitenwandverstärkung in Vorderansicht in einfacher Ausführung und
- **Figur 2:**: eine zweite aus einem erfindungsgemäßen maßgeschneiderten Halbzeug kaltgeformte Seitenwandverstärkung in Vorderansicht in erweiterter Ausführung.

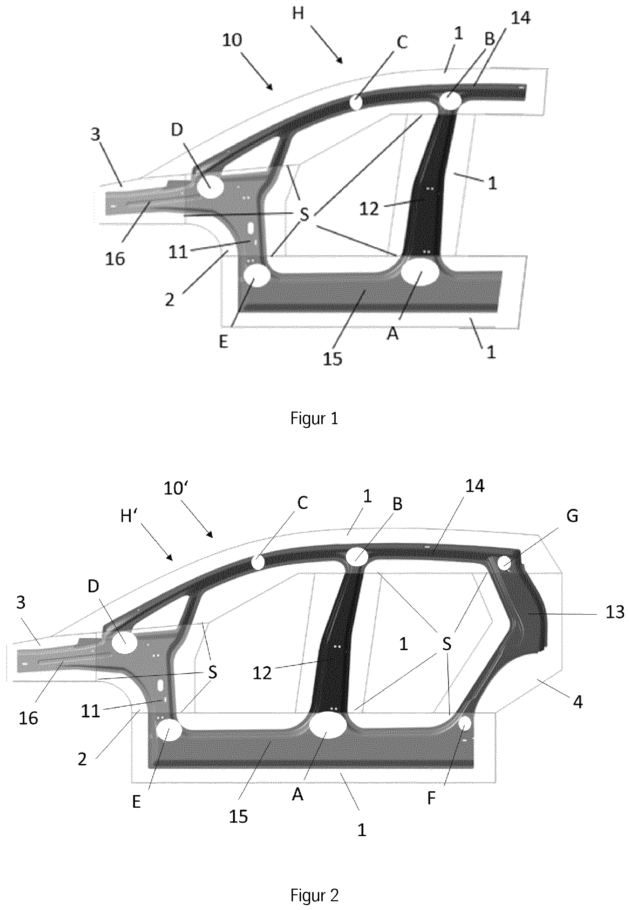

**Figur 1** zeigt ein maßgeschneidertes Halbzeug (H) zur Herstellung einer kaltgeformten Seitenwandverstärkung (10) umfassend mehrere Platinen (1, 2, 3) mit unterschiedlicher Stahlzusammensetzung und/oder unterschiedlicher Dicke, welche stoffschlüssig mittels Schweißen im Stumpfstoß miteinander verbunden sind. Die Schweißnähte zwischen den einzelnen Platinen (1, 2, 3) sind mit (S) gekennzeichnet. Alle Platinen (1, 2, 3) sind vorzugsweise mit einem zinkbasierten Überzug beschichtet. Alternativ wäre auch denkbar, dass sie zum Teil unbeschichtet ausgeführt sein können. Auch bei der Verwendung eines zinkbasierten Überzugs kann die Zusammensetzung und/oder die Dicke der Überzuge variieren.

Die mindestens eine erste Platine (1) ist aus einem Stahlwerkstoff vorgesehen, welche eine Zugfestigkeit von größer 1100 bis 1500 MPa aufweist. Vorzugsweise besteht oder bestehen die ersten Platinen (1) aus Dualphasen- und/oder Q&P-Stahlwerkstoffen, bevorzugt aus der Güte DP1200. Die mindestens eine zweite Platine (2) ist aus einem Stahlwerkstoff vorgesehen, welche eine Zugfestigkeit von größer 900 bis maximal 1100 MPa aufweist. Vorzugsweise besteht die zweite Platine (2) aus einem Dualphasen- oder Q&P-Stahlwerkstoff, bevorzugt aus der Güte DP1000. Die mindestens eine dritte Platine (3) ist aus einem Stahlwerkstoff vorgesehen, welche eine Zugfestigkeit von größer 700 bis maximal 900 MPa aufweist. Vorzugsweise besteht die dritte Platine (3) aus einem Dualphasen-Stahlwerkstoff, bevorzugt aus der Güte DP800.

Mittels bekanntem Kaltformen wird aus dem maßgeschneiderten Halbzeug (H) mit den unterschiedlich angeordneten Platinen (1, 2, 3) eine Seitenwandverstärkung (10) mit einer A-Säule (11), einer B-Säule (12), einem Dachträger (14) und einem Schweller (15), optional einem vorderen Längsträger (16), hergestellt. Dabei ist wesentlich, dass ein Verstärkungsblech (A) im Abschnitt des Übergangs zwischen B-Säule (12) und Schweller (15) angebunden ist.

Eine erste Platine (1) ist im Halbzeug (H) derart angeordnet, woraus sich der Dachträger (14) und ein Teilabschnitt der A-Säule (11) ergibt. Die Dicke der einen ersten Platine (1), aus welcher der Dachträger (14) und der Teilabschnitt der A-Säule (14) nach dem Kaltformen resultiert, beträgt beispielsweise 1,5 mm. Somit wären für diese eine erste Platine (1) bevorzugt Dicken zwischen 1,3 und 1,7 mm vorzusehen.

Des Weiteren ist ein Teilabschnitt der B-Säule (12) aus einem Stahlwerkstoff mit einer Zugfestigkeit von größer 1100 bis 1500 MPa ausgebildet, welche wiederum von einer weiteren ersten Platine (1) mit einer Dicke von beispielsweise 1,5 mm bereitgestellt werden kann. Somit wären für diese eine weitere erste Platine (1) bevorzugt Dicken zwischen 1,2 und 1,8 mm vorzusehen.

Des Weiteren ist der Schweller (15) aus einem Stahlwerkstoff mit einer Zugfestigkeit von größer 1100 bis 1500 MPa ausgebildet, welche wiederum von einer weiteren ersten Platine (1) mit einer Dicke von beispielsweise 1,2 mm bereitgestellt werden kann. Somit wären für diese eine weitere erste Platine (1) bevorzugt Dicken zwischen 1,0 und 1,5 mm vorzusehen.

Des Weiteren ist ein Teilabschnitt der A-Säule (11) aus einem Stahlwerkstoff mit einer Zugfestigkeit von größer 700 bis 900 MPa oder von größer 900 bis 1100 MPa ausgebildet, welche von einer zweiten Platine (2) mit einer Dicke von beispielsweise 1,8 mm bereitgestellt werden kann. Somit wären für diese eine zweite Platine (2) bevorzugt Dicken zwischen 1,6 und 2,0 mm vorzusehen.

Des Weiteren kann optional ein vorderer Längsträger (16) aus einem Stahlwerkstoff mit einer Zugfestigkeit von größer 700 bis 900 MPa oder von größer 900 bis 1100 MPa ausgebildet sein, welcher von einer dritten Platine (3) mit einer Dicke von beispielsweise 1,3 mm bereitgestellt werden kann. Somit wären für diese eine dritte Platine (3) bevorzugt Dicken zwischen 1,1 und 1,5 mm vorzusehen.

Die kaltgeformte Seitenwandverstärkung (10) in einer einfachen Ausführung eines Türrings in **Figur 1** ist zur Verwendung in einem nicht dargestellten Fahrzeug mit Hybridantrieb oder mit Elektroantrieb konzipiert, welche eine verbesserte Torsionssteifigkeit und/oder Crashperformance durch das Vorsehen eines Verstärkungsblechs (A) im Abschnitt des Übergangs zwischen B-Säule (12) und Schweller (15) bereitstellen kann.

Zur Optimierung der Torsionssteifigkeit können in mindestens einem der folgend genannten Abschnitte weitere Verstärkungsbleche (B, C, D, E) vorgesehen werden. So zum Beispiel kann ein Verstärkungsblech (B) im Abschnitt des Übergangs zwischen B-Säule (12) und Dachträger (14) angebunden sein. Zusätzlich oder alternativ kann ein Verstärkungsblech (C) im Abschnitt des Dachträgers (14) im Bereich der Anbindung zum oberen Windlauf angebunden sein. Des Weiteren kann zusätzlich oder alternativ ein Verstärkungsblech (D) im Abschnitt der A-Säule (11) im Bereich der Anbindung zum unteren Windlauf angebunden sein. Zusätzlich oder alternativ kann des Weiteren ein Verstärkungsblech (E) im Abschnitt des Übergangs zwischen A-Säule (11) und Schweller (15) angebunden sein.

Die Verstärkungsbleche (A, B, C, D, E) bestehen aus einem Stahlwerkstoff, vorzugsweise aus einem mikrolegierten Stahlwerkstoff, Dualphasen- und/oder Q&P-Stahlwerkstoff mit einer Zugfestigkeit zwischen 400 und 1500 MPa und weisen bevorzugt Dicke zwischen 0,8 und 2,5 mm auf.

**Figur 2** zeigt eine kaltgeformte Seitenwandverstärkung (10`) einer erweiterten Ausführung in Form eines Doppeltürrings, welche aus einem im Vergleich zu Figur 1 maßgeschneiderten Halbzeug (H`) kaltgeformt wird, mit dem Unterschied, dass zusätzlich mindestens eine vierte Platine (4) ist aus einem Stahlwerkstoff vorgesehen sein kann, welche eine Zugfestigkeit von mindestens 400 bis maximal 700 MPa aufweist. Vorzugsweise besteht die vierte Platine (4) aus einem Dualphasen-Stahlwerkstoff, bevorzugt aus der Güte DP600.

Die mindestens eine vierte Platine (4) kann beispielsweise mit einer Dicke von 1,1 mm bereitgestellt werden, woraus ein Teilabschnitt der C-Säule (13) nach dem Kaltformen resultiert. Somit wären für diese eine vierte Platine (4) bevorzugt Dicken zwischen 0,9 und 1,3 mm vorzusehen.

Zur Optimierung der Torsionssteifigkeit können in mindestens einem der folgend genannten Abschnitte weitere Verstärkungsbleche (B, C, D, E, F, G) vorgesehen werden. Neben den bereits in **Figur 1** genannten Abschnitten können hier zusätzlich oder alternativ ein Verstärkungsblech (F) im Abschnitt des Übergangs zwischen C-Säule (13) und Schweller (15) und/oder ein Verstärkungsblech (G) im Abschnitt des Übergangs zwischen C-Säule (13) und Dachträger (14) angebunden sein.

Die Verstärkungsbleche (A, B, C, D, E, F, G) bestehen aus einem Stahlwerkstoff, vorzugsweise aus einem mikrolegierten Stahlwerkstoff, Dualphasen- und/oder Q&P-Stahlwerkstoff mit einer Zugfestigkeit zwischen 400 und 1500 MPa und weisen bevorzugt Dicke zwischen 0,8 und 2,5 mm auf.

Denkbar wäre auch, dass mindestens eine der Platinen (1, 2, 3, 4) flexibel gewalzt ausgeführt sein kann, wobei die Herstellung und Verarbeitung von flexiblen gewalzten Flachprodukten dem Fachmann ebenfalls geläufig ist.

Kommen beispielsweise zwei Seitenwandverstärkungen zur Anwendung, können entweder nur die innere Seitenwandverstärkung oder nur die äußere Seitenwandverstärkung oder auch beide Seitenwandverstärkungen erfindungsgemäß ausgeführt sein.

## Patentansprüche

1. Maßgeschneidertes Halbzeug (H, H`) zur Herstellung einer kaltgeformten Seitenwandverstärkung (10, 10') umfassend mehrere Platinen (1, 2, 3, 4) mit unterschiedlicher Stahlzusammensetzung und/oder unterschiedlicher Dicke, welche stoffschlüssig miteinander verbunden sind, wobei sich aus den Platinen (1, 2, 3, 4) eine Seitenwandverstärkung (10, 10') mit einer A-Säule (11), einer B-Säule (12), optional einer C-Säule (13), einem Dachträger (14) und einem Schweller (15), optional einem vorderen Längsträger (16), ergibt, wobei in mindestens einem Abschnitt des Halbzeugs (H) ein Verstärkungsblech (A, B, C, D, E, F, G) vorgesehen ist, **dadurch gekennzeichnet, dass** ein Verstärkungsblech (A) im Abschnitt des Übergangs zwischen B-Säule (12) und Schweller (15) angebunden ist.

2. Halbzeug nach Anspruch 1, wobei ein Verstärkungsblech (B) im Abschnitt des Übergangs zwischen B-Säule (12) und Dachträger (14) angebunden ist.

3. Halbzeug nach einem der vorgenannten Ansprüche, wobei ein Verstärkungsblech (C) im Abschnitt des Dachträgers (14) im Bereich der Anbindung zum oberen Windlauf angebunden ist.

4. Halbzeug nach einem der vorgenannten Ansprüche, wobei ein Verstärkungsblech (D) im Abschnitt der A-Säule (11) im Bereich der Anbindung zum unteren Windlauf angebunden ist.

5. Halbzeug nach einem der vorgenannten Ansprüche, wobei ein Verstärkungsblech (E) im Abschnitt des Übergangs zwischen A-Säule (11) und Schweller (15) angebunden ist.

6. Halbzeug nach einem der vorgenannten Ansprüche, wobei ein Verstärkungsblech (F) im Abschnitt des Übergangs zwischen C-Säule (13) und Schweller (15) angebunden ist.

7. Halbzeug nach einem der vorgenannten Ansprüche, wobei ein Verstärkungsblech (G) im Abschnitt des Übergangs zwischen C-Säule (13) und Dachträger (14) angebunden ist.

8. Halbzeug nach einem der vorgenannten Ansprüche, wobei die eine erste Platine (1) im Halbzeug (H, H`) derart angeordnet ist, woraus sich der Dachträger (14) und ein Teilabschnitt der A-Säule (11) ergibt.

9. Halbzeug nach einem der vorgenannten Ansprüche, wobei mindestens eine dritte Platine (3) aus einem Stahlwerkstoff vorgesehen ist, welche eine Zugfestigkeit von größer 700 bis maximal 900 MPa aufweist, wobei optional eine dritte Platine (3) im Halbzeug (H, H`) derart angeordnet ist, woraus sich der vordere Längsträger (16) ergibt.

10. Halbzeug nach einem der vorgenannten Ansprüche, wobei mindestens eine vierte Platine (4) aus einem Stahlwerkstoff vorgesehen ist, welche eine Zugfestigkeit von mindestens 400 bis maximal 700 MPa aufweist, wobei optional eine vierte Platine (3) im Halbzeug (H`) derart angeordnet ist, woraus sich zumindest ein Teilabschnitt der C-Säule (13) ergibt.

11. Halbzeug nach einem der vorgenannten Ansprüche, wobei eine weitere erste Platine (1) im Halbzeug (H, H`) derart angeordnet ist, woraus sich zumindest ein Teilabschnitt der B-Säule (12) ergibt.

12. Halbzeug nach einem der vorgenannten Ansprüche, wobei eine weitere erste Platine (1) im Halbzeug (H, H`) derart angeordnet ist, woraus sich zumindest ein Teilabschnitt des Schwellers (15) oder der Schweller (15) ergibt.

13. Halbzeug nach einem der vorgenannten Ansprüche, wobei eine zweite Platine (1) im Halbzeug (H, H`) derart angeordnet ist, woraus sich zumindest ein Teilabschnitt der A-Säule (11) ergibt.

14. Kaltgeformte Seitenwandverstärkung (10, 10') mit einer A-Säule (11), einer B-Säule (12), optional einer C-Säule (13), einem Dachträger (14) und einem Schweller (15), und optional einem vorderen Längsträger (16), wobei die Seitenwandverstärkung (10, 10') aus einem maßgeschneiderten Halbzeug (H, H`) kaltgeformt ist, wobei Abschnitte der Seitenwandverstärkung (10, 10') mit unterschiedlicher Stahlzusammensetzung und/oder unterschiedlicher Dicke ausgebildet sind, wobei in mindestens einem Abschnitt der Seitenwandverstärkung (10, 10') ein zusätzliches Verstärkungsblech (A, B, C, D, E, F, G) angebunden ist, insbesondere hergestellt durch ein Halbzeug (H, H`) nach einem der vorgenannten Ansprüche, **dadurch gekennzeichnet, dass** ein Verstärkungsblech (A) im Abschnitt des Übergangs zwischen B-Säule (12) und Schweller (15) angebunden ist, wobei optional ein Verstärkungsblech (B) im Abschnitt des Übergangs zwischen B-Säule (12) und Dachträger (14) angebunden sein kann, wobei optional ein Verstärkungsblech (C) im Abschnitt des Dachträgers (14) im Bereich der Anbindung zum oberen Windlauf angebunden sein kann, wobei optional ein Verstärkungsblech (D) im Abschnitt der A-Säule (11) im Bereich der Anbindung zum unteren Windlauf angebunden sein kann, wobei optional ein Verstärkungsblech (E) im Abschnitt des Übergangs zwischen A-Säule (11) und Schweller (15) angebunden sein kann, wobei optional ein Verstärkungsblech (F) im Abschnitt des Übergangs zwischen C-Säule (13) und Schweller (15) angebunden sein kann, wobei optional ein Verstärkungsblech (G) im Abschnitt des Übergangs zwischen C-Säule (13) und Dachträger (14) angebunden sein kann.

15. Kaltgeformte Seitenwandverstärkung nach Anspruch 14, wobei der Dachträger (14) und ein Teilabschnitt der A-Säule (11) aus einem Stahlwerkstoff mit einer Zugfestigkeit von größer 1100 bis 1500 MPa ausgebildet ist, wobei optional ein Teilabschnitt der B-Säule (12) aus einem Stahlwerkstoff mit einer Zugfestigkeit von größer 1100 bis 1500 MPa ausgebildet sein kann, wobei optional ein Teilabschnitt des Schwellers (15) oder der Schweller (15) aus einem Stahlwerkstoff mit einer Zugfestigkeit von größer 1100 bis 1500 MPa ausgebildet sein kann, wobei optional ein Teilabschnitt der A-Säule (11) aus einem Stahlwerkstoff mit einer Zugfestigkeit von größer 900 bis 1100 MPa ausgebildet sein kann, wobei optional ein Teilabschnitt der C-Säule (13) aus einem Stahlwerkstoff mit einer Zugfestigkeit von mindestens 400 bis 700 MPa ausgebildet sein kann, wobei optional der vordere Längsträger (16) aus einem Stahlwerkstoff mit einer Zugfestigkeit von größer 700 bis 900 MPa ausgebildet sein kann.

16. Kaltgeformte Seitenwandverstärkung nach Anspruch 14 oder 15 zur Verwendung in einem Fahrzeug mit Hybridantrieb oder mit Elektroantrieb.
